# EUROPÄISCHE PATENTSCHRIFT

(11) **EP 2 080 819 B1**
(45) Veröffentlichungstag und Bekanntmachung des Hinweises auf die Patenterteilung: **07.04.2010**
(21) Anmeldenummer: 08021001.6
(22) Anmeldetag: 03.12.2008
(51) Int. Cl.: C23F 11/02, B32B 27/18, B65B 55/19, B65D 81/26

(54) **Dampfphasen-Korrosionsinhibitoren und Verfahren zu deren Herstellung**
Phase corrosion inhibitors and method for their production
Inhibiteurs de corrosion en phases vapeur et leur procédé de fabrication

(30) Priorität: 12.12.2007 DE 102007059726
(43) Veröffentlichungstag der Anmeldung: 22.07.2009
(73) Patentinhaber: EXCOR Korrosionsforschung GmbH, 01067 Dresden (DE)
(72) Erfinder: Reinhard, Georg, 01099 Dresden (DE); Ludwig, Urte, 01259 Dresden (DE); Hahn, Gerhard, 34346 Hann. Münden (DE)
(74) Vertreter: Katzameyer, Michael

(56) Entgegenhaltungen:
- DD-A5- 298 662
- GB-A- 728 634
- US-A- 2 986 447
- US-A- 3 398 095
- US-A- 4 124 549
- US-A1- 2007 145 334

## Beschreibung

Die vorliegende Erfindung betrifft Stoffkombinationen als Dampfphasen-Korrosionsinhibitoren (verdampfungs- oder sublimationsfähige Korrosionsinhibitoren, vapour phase corrosion inhibitors VPCI, volatile corrosion inhibitors, VCI) zum Schutz von üblichen Gebrauchsmetallen, wie Eisen, Chrom, Nickel, Zinn, Zink, Aluminium, Kupfer, Magnesium und deren Legierungen gegen Korrosion in Feuchtluft-Klimata.

Es wird bereits seit mehreren Jahrzehnten davon Gebrauch gemacht, Korrosionsinhibitoren, die schon unter Normalbedingungen zur Verdampfung oder Sublimation neigen und dadurch über die Gasphase an zu schützende Metalloberflächen gelangen können, zum temporären Korrosionsschutz von Metallgegenständen innerhalb von geschlossenen Räumen, z.B. in Verpackungen, Schaltschränken oder Schaukästen einzusetzen. Auf diese Weise Metallteile während der Lagerung und Transporten vor Korrosion zu schützen, ist die saubere Alternative zum temporären Korrosionsschutz mit Ölen, Fetten oder Wachsen und gewinnt mit der zunehmenden Globalisierung der Volkswirtschaften an Bedeutung.

Alle Maßnahmen des temporären Korrosionsschutzes für Metalle gegen die Einwirkung neutraler wäßriger Medien oder kondensierter Wasserfilme haben bekanntlich das Ziel, die auf Gebrauchsmetallen nach erstem Kontakt mit der Atmosphäre stets vorhandene Primäroxidschicht (primary oxide layer, POL) vor chemischen und mechanischen Abbau zu konservieren (vgl. z.B.: E. Kunze (Hrsg.), Korrosion und Korrosionsschutz, Band 3, Wiley-VCH, Berlin, Weinheim, New York 2001, S. 1680 ff.).

Die Startreaktionen der Korrosion von Metallen (Me) in wäßrigen Medien bestehen nämlich immer in einem selektiven oder generellen Abbau der betreffenden POL, allgemein formuliert z.B.:

MeO + 2 H₂O → Me(OH)₂ → Me²⁺ + 2 OH⁻ (1)

bevor in Folgeschritten das freigelegte Metall oxidiert werden kann, z.B.:

Me → Me²⁺ + 2 e- (2)

½ O₂ + H₂O + 2 e⁻ → 2 OH⁻ (3)

Me + ½ O₂ + H₂O → Me²⁺ + 2 OH⁻ (4)

Eine Möglichkeit, diese Teilschritte durch flüchtige Korrosionsinhibitoren (VCI) mehr oder weniger stark zu verzögern und damit einen temporären Korrosionsschutz zu erreichen, besteht in der Anwendung von Aminen.

Amine als organische Abkömmlinge des Ammoniaks NH₃ reagieren bei Hydrolyse basisch, z.B.:

NH₃ + H₂O ⇔ NH₄⁺ + OH⁻ (5)

wobei neben den Hydroxylionen OH⁻ auch Ionen der allgemein formulierten Art NRH₃⁺, NR₂H₂⁺ oder NR₃H⁺ entstehen, je nachdem, ob primäre (NRH₂), sekundäre (NR₂ H) oder tertiäre (NR₃) Amine zur Anwendung gelangen.

Mit dieser zusätzlichen Bildung von OH⁻ -Ionen können mindestens 2 Effekte erreicht werden,
- eine Einschränkung der Auflösungstendenz der POL (Zurückdrängen der Reaktion (1)) und
- eine Behinderung der Sauerstoffreduktion nach Reaktion (3) als kathodischem Teilschritt der Korrosionsreaktion (4).

Da viele Amine bereits unter Normalbedingungen einen Dampf- oder Sublimationsdruck haben, ist ihre Anwendung als VCI naheliegend und in vielen Patenten beschrieben. Vorrangig sind dabei die cyclischen Amine Dicyclohexylamin und Cyclohexylamin genannt. In den beispielhaft zitierten Patentschriften US 600.328, US 2,419,327, US 2,432,839, US 4,051,066, US 4,275,835, DD-PS 284 254 und DD-PS 284 255) ist dabei schon dem Umstand Rechnung getragen, dass mit Aminen allein kein zuverlässiger temporärer Korrosionsschutz resultieren kann und daher der Einsatz von Aminen mit Stoffen, die als Passivatoren fungieren können, kombiniert. Dadurch erreicht man, die POL als oxidische Deckschicht auf Metalloberflächen spontan nachzubilden, wenn sie durch partielle chemische Auflösung bzw. lokalen mechanischen Abtrag (Abrasion, Erosion) zerstört wurde (vgl. z.B.: E. Kunze, loc.cit.; E. Vuorinen, E. Kalman, W. Focke, Introduction to vapour phase corrosion inhibitors in metal packaging, Surface Engineering, Vol. 20(2004)281ff.)).

Als solche passivierenden Oxidationsmittel haben sich die Nitrite als Salze der salpetrigen Säure im praktischen Korrosionsschutz vielfältig bewährt. Sie finden daher auch schon lange Anwendung als VCI. Namentlich das relativ leicht flüchtige Dicyclohexylammoniumnitrit wird schon mehr als 60 Jahre als VCI angewandt (vgl. z.B. Kunze, loc. cit.; Vuorinen et al, loc. cit.) und ist als Bestandteil von VCI-Kompositionen in zahlreichen Patentschriften genannt (z.B.: US-PS 2.419.327, US-PS 2.432.839, US-PS 2.432.840, US-PS 2.534.201, US-PS 4.290.912, US-PS 4.973.448, JP 02085380, JP 62109987, JP 63210285 A, DE-PS 4040586).

Die Wirkung des Nitritions als Oxidationsmittel ist mit seiner elektrochemischen Reduktion verbunden, z. B. gemäß:

2 NO₂⁻ + 2 H⁺ + 2 e⁻ → 2 NO + 2 OH⁻ (6)

Da hierbei Hydroxylionen, OH⁻, entstehen, verläuft die Reduktion in wäßrigen Medien um so weniger intensiv, je höher bereits der pH-Wert dieses Mediums ist.

Unter diesem Aspekt ist es unvorteilhaft, dass durch das Dicyclohexylamin, bzw. die durch Dissoziation des Dicyclohexylammoniumnitrits entstehenden Dicyclohexylammoniumionen in Wasser bei Raumtemperatur Werte um pH ≈ 9 eingestellt werden. Das ist zudem nicht nur für die Entfaltung der Passivatorwirkung des Nitrits hinterlich, sondern gefährdet z.B. auch die Stabilität der Passivoxidschicht von Zink- und Aluminiumwerkstoffen. Bekanntlich sind die Oxide dieser Metalle nur im Neutralbereich beständig und erleiden bei pH > 8 zunehmende Auflösung unter Zinkat- oder Aluminatbildung.

In der Bestrebung, VCI-Verpackungsmittel zu schaffen, die nicht nur für Eisenmetalle, sondern mindestens auch für verzinkte Stähle und Aluminiumwerkstoffe anwendbar sind, wurde versucht, VCI-Kombinationen zu formulieren, die nicht nur Aminnitrite, sondern auch Komponenten enthalten, die in kondensierten Wasserfilmen auf Metalloberflächen pH-regulierend eingreifen, so dass es nicht zur Auflösung von Passivoxidschichten kommt.

So wurde vorgeschlagen, Nitrit-Amin-Mischungen mit weiteren sublimationsfähigen Stoffen, wie etwa den Salzen mittelstarker bis schwacher, gesättigter oder ungesättigter Carbonsäuren zu kombinieren, vgl. z.B. US 2.419.327, US 2.432.839, 2.432.840, DE 814.725. Man erreicht dadurch zwar einen verbesserten Schutz der üblichen Al- und Zn-Werkstoffe, wenn diese mit einem wäßrigen Medium oder Kondenswasserfilm in Kontakt sind, doch werden durch diese Spezies gleichzeitig die Passivatoreigenschaften des Nitrits gemindert.

Die betreffenden Carboxylate bauen bekanntlich in wässrigen Medien oder Kondenswasserfilmen auf Metalloberflächen mit oder ohne gleichzeitige Anwesenheit eines Amins in Abhängigkeit von dem jeweils vorliegenden Carbonsäure/Salz-System pH-Puffersysteme höherer Pufferkapazität auf und behindern somit die Reduzierbarkeit von Oxidationsmitteln, was aus der oben aufgeführten Reduktionsreaktion für Nitrit (6) prinzipiell deutlich wird. Diese für den Passivierungseffekt notwendige Reaktion verläuft bekanntlich von links nach rechts nur freiwillig, wenn das betreffende Reaktionsmedium nicht schon über eine entsprechend hohe Konzentration an OH⁻ -Ionen verfügt oder die entstehenden OH⁻ -Ionen regelmäßig aus dem Medium ausgetragen werden.

Sind diese Bedingungen nicht gegeben, dann läßt sich der Passivierungseffekt nur erreichen, wenn die Konzentration des Oxidationsmittels im Medium vergleichsweise viel höher als die entstehenden OH⁻ -Ionen eingestellt wird, etwa indem umgesetzte Anteile des Oxidationsmittels aus einem Depot kontinuierlich ergänzt werden.

Alle Erfindungen, die VCI-Kombinationen vorschlagen, die neben einem Oxidationsmittel wie Nitrit, Chromat oder einer organischen Nitroverbindung auch ein Amin oder Amincarboxylat enthalten, können folglich bei der praktischen Umsetzung nur erfolgreich sein, wenn das passivierend wirkende Oxidationsmittel bezogen auf den Anteil der übrigen Wirkstoffe in überhöhten Konzentrationen zur Anwendung gelangt. Dieser Umstand wird jedoch aus den entsprechenden Patentschriften nicht immer ohne weiteres erkennbar, da die Konzentrationsbereiche, in denen die erfindungsgemäßen VCI-Kombinationen einsetzbar sind, gewöhnlich sehr großzügig angegeben werden. Derartige oxidationsmittelhaltige VCI-Kombinationen sind z.B. beschrieben in der US-PS 600.328, wo empfohlen wird, möglichst viel eines organischen Nitritsalzes zur Anwendung zu bringen, bzw. in der DE-PS 814 725, in der Nitritsalze organischer Stickstoffhaltiger Basen (z. B.: Carboxylate, Piperidine, Oxazine oder Morpholine) vorgeschlagen werden unter der Bedingung, dass mindestens 0,5 bis 20 g des Nitrits / m² Verpackungsmaterial aufzutragen sind und zuverlässiger Schutz erst gegeben ist, wenn davon mindestens 35 bis 600 g / m³ Innenraum der Verpackung emittiert wurden.

Da heute die praktische Anwendung der bezeichneten Oxidationsmittel infolge ihrer bekannt gewordenen, mehr oder weniger schädigenden Wirkung auf Mensch und Umwelt reglementiert wird und es hinsichtlich der Konzentration in Zubereitungen einzuhaltende Arbeitsplatzgrenzwerte (AGW) gibt (vgl. z. B. Einstufung von Stoffen und Zubereitungen gemäß EG-Richtlinie 67/548/EWG einschließlich jährlicher Anpassung), sind die genannten VCI-Kombinationen mit überhöhten Passivatoranteilen nicht mehr einsetzbar.

Als Ersatz dafür wurde beispielsweise in den US-PS 5,209,869, US-PS-5.332.525 und dem EP 0662 527 A1 vorgeschlagen, die aus Nitriten und Amincarboxylaten mit oder ohne Molybdat bestehenden VCI-Mischungen noch mit einem Trockenmittel, wie Kieselgel zu kombinieren, damit die Ausbildung eines kondensierten Wasserfilms auf der zu schützenden Metalloberfläche und der damit verbundene, nachteilige pH-Effekt möglichst lange hinausgezögert werden. Allerdings hat dieser Vorschlag den entscheidenden Nachteil, dass das auf oder in dem Verpackungsmittel fixierte VCI-System infolge des vorhandenen Trockenmittels zur starken Wasseraufnahme aus der Umgebung neigt, was wiederum zu einer Beeinträchtigung der Emissionsrate der VCI-Komponenten in den Innenraum geschlossener Verpackungen und damit zu einer Minderung des VCI-Korrosionsschutzeffektes führt.

Die meisten der bisher bekannten VCI-Systeme, die gleichzeitig ein Nitrit und ein Amin enthalten, können die geforderte Zuverlässigkeit schon aus den bereits erwähnten Gründen nicht erbringen. Als weiterer Unsicherheitsfaktor hat sich inzwischen erwiesen, dass vor allem die als VCI-Komponenten eingeführten sekundären Amine und cyclischen Stickstoff-haltigen Verbindungen, wie z.B. Morpholin und Piperidin, leicht zu N-Nitrosoverbindungen umgewandelt werden. Diese N-Nitrosamine agieren gewöhnlich als schwache Oxidationsmittel und fördern die Korrosion der Metalle. Wesentlich nachteiliger ist jedoch ihre kanzerogene Wirkung, die der großtechnischen Nutzung dieser VCI-Systeme im Wege steht.

Zunächst versuchte man diesen Nachteil mit der Substitution des Nitrits durch ein anderes Oxidationsmittel zu beheben, da zu vermuten war, dass die Nitrosierung der Amine nur durch die gleichzeitige Anwesenheit von Nitrit verursacht wird. In der US-PS 4051066 wird daher anstelle des Nitrits m-Nitro- und Dinitrobenzoat eingesetzt, die DD-PS 268 978 und DD-PS 295 668 schlagen dagegen die Anwendung von Dicyclohexylamin-o-Nitrophenolat und Dicyclohexylamin-m-Nitrobenzoat vor. Die US-PS 1224500 verallgemeinert schließlich auf die Anwendung flüchtiger aliphatischer und aromatischer Nitroverbindungen zusammen mit heterocyclischen Aminen und erwähnt 2-Nitropropan, Nitrobenzol und Dinitrobenzol konkret.

Zum einen erwiesen sich jedoch die Passivatoreigenschaften dieser alternativen Oxidationsmittel im Vergleich zum Nitrit als wesentlich schwächer und zum anderen wurde der beabsichtigte Effekt, bei den gleichsam verwendeten Aminen die N-Nitrosaminbildung zu vermeiden, nicht erreicht. Inzwischen ist bekannt, dass gerade solche bewährten VCI-Komponenten, wie das Morpholin und das Dicyclohexylamin schon durch die normalen Bestandteile der Luft nitrosiert werden, insbesondere bei Kontakt mit Metallen und bei höheren Temperaturen. Das verbietet praktisch ihre Einarbeitung in Kunststoffe, denn die Schmelz-, Spritz- oder Blasextrusion findet bekanntlich bei Temperaturen um 200 °C in metallischen Anlagen statt.

Um gerade die Nachfrage nach mit VCI ausgerüsteten Folien und Hartkunststoffen für die Bewältigung von Überseetransporten zu befriedigen, wurde die Anwendung aminfreier, nitrithaltiger VCI-Systeme vorgeschlagen. So wird in der US-PS 3836077 die Kombination von Nitrit mit Borat und einem Phenol, das mit Styren mono-, di- oder trisubstituiert ist, genannt. Der VCI-Korrosionsschutzeffekt blieb jedoch minimal, weil weder das Borat noch die aromatisch substituierten Phenole aus den polymeren Trägermaterialien sublimieren.

Die US-PS 4 290 912 hebt dagegen für die Herstellung von VCI-Folien auf die Anwendung von anorganischen Nitriten in Kombination mit einem dreifach substituierten Phenol und Silicagel ab, doch belegen die Ausführungsbeispiele, dass im Falle der Phenole nur aliphatisch substituierte und vor allem das 2.6-Di-tert.-butyl-4-methyl-phenol (butyliertes Hydroxytoluol, BHT) gemeint sind. Da diese substituierten Phenole schon bei Normaltemperatur zur Sublimation neigen, konnte mit dieser Kombination für Nitrit ohne Mitwirkung eines flüchtigen Amins eine verbesserte Sublimationsrate erreicht werden, doch kann das auf der Metalloberfläche eintreffende Nitrit ohne Mitwirkung weiterer Komponenten keinen zuverlässigen VCI-Korrosionsschutz realisieren. Es bedarf bei passivierenden Metallen bekanntlich der Mitwirkung von Komponenten, die den pH-Wert in kondensierten Wasserfilmen in einen für die Passivierung günstigen Bereich einstellen und die ausgebildete Passivoxidschicht durch Adsorption gegen Auflösung stabilisieren (vgl. z.B. E. Kunze, loc.cit.), was mit den in US-PS 4 290 912 beanspruchten Wirkstoffkombinationen nicht gegeben ist. Zudem kommt es durch das Nitrit bei Kupferwerkstoffen in neutralen wäßrigen Lösungen zur Schwarzfärbung infolge Bildung des Oxids CuO.

Namentlich zum Schutz von Kupfer und Kupferlegierungen vor atmosphärischer Korrosion ist seit langem Benzotriazol im Einsatz (vgl. z.B. Kunze, loc. cit.). Da jedoch die Sublimationstendenz dieser Verbindung relativ gering ist, wird in der DE-PS 1182503 und der US-PS 3.295.917 vorgeschlagen, das Depot dieses VCI zunächst auf eine höhere Temperatur (bis ca. 85 °C) einzustellen und gleichzeitig die Metallgegenstände, auf denen die Kondensation erfolgen soll, zu kühlen. In den US-PS 2.941.953 und 3.887.481 ist dagegen das Imprägnieren von Papier mit Benzotriazol und/oder Tolyltriazol beschrieben.
Es kommen organische Lösungsmittel, wie das Tetrachlorethylen zum Einsatz und es wird vorgeschrieben, die zu schützenden Metallteile möglichst eng und dicht mit dem so imprägnierten VCI-Verpackungsmittel zu umhüllen, um den Abstand zwischen VCI-Depot und zu schützender Metalloberfläche möglichst gering zu halten. Diese Technologie hat jedoch den Nachteil, dass der Wirkstoff in Form feinster Pulverpartikel auf dem Papier nur geringfügig haftet und leicht abrieseln kann, so dass die Korrosionsschutzeigenschaften dieser Verpackungsmittel nicht zuverlässig zu gestalten sind. Sie würden überdies ausschließlich auf Kupferwerkstoffe beschränkt bleiben

Um VCI emittierende Verpackungsmittel anzubieten, die für den Korrosionsschutz verschiedener Metalle einsetzbar sind, wurden bereits die unterschiedlichsten Kombinationen von Wirkstoffen in Vorschlag gebracht. Hierzu nennen EP 0662527 Gemische von Benzotriazol mit Cyclohexylaminbenzoat und Ethylaminbenzoat oder mit wasserfreiem Natriummolybdat und Dicyclohexylaminnitrit, US-PS 4.051.066 und UD-PS 4.275.835 Gemische von Benzotriazol mit Ammonium- und Aminmolybdaten, Aminbenzoaten und -nitraten, US-PS 4.973.448 Gemische von Benzotriazol mit organischen Carbonaten, Phosphaten und Aminen, JP 62063686 und JP 63210285 A schließlich Gemische von Benzotriazol mit Alkali- und Aminsalzen aromatischer Carbonsäuren.

Kombinationen des Benzo-, Tolyl- oder Methylbenzotriazols mit anderen Stickstoff-organischen flüchtigen Feststoffen sind z.B. in JP 62109987, JP 61015988, DD-PS 268978 und DD-PS 298662 beschrieben. Nachteilig ist, dass alle ammoniumionen- und aminhaltigen Komponenten wegen ihrer mehr oder weniger ausgeprägten Tendenz zur Komplexbildung mit Metallionen die Schutzwirkung der Triazole vor allem gegenüber Buntmetallen wieder herabsetzen. Außerdem sind die bezeichneten Amine und Ammoniumverbindungen stark hydrophil. VCI-Depots, die derartige Stoffe enthalten, neigen zur verstärkten Wasseraufnahme. Infolge ihrer Hydrolyse kommt es anschließend gewöhnlich zu einer stärkeren Senkung ihrer Sublimationstendenz, was zwangsläufig eine Minderung des Korrosionsschutzeffektes zur Folge hat.

Zur Nutzung der Vorteile des Einsatzes von VCI und des Inhibitoreffektes der Triazolstruktur wird in der JP-PS 03079781 vorgeschlagen, anstelle der Stoffkombinationen Triazol/Amin lediglich Alkylaminotriazole zu verwenden. In der Tat haben die explizit aufgeführten Stoffe 3-Amino-1.2.4-Triazol und 3-Amino-5-Methyl-1.2.4-Triazol eine höhere Verflüchtigungsrate, allerdings vor allem gegenüber Kupfer keinen so deutlichen Korrosionsschutzeffekt, wie das Benzo- und Tolyltriazol.

Überdies wären die vorgeschlagenen Alkylaminotriazole auf alle Fälle allein nicht geeignet, als Korrosionsinhibitoren für die breite Palette der Gebrauchmetalle eingesetzt werden zu können.

VCI emittierende Verpackungsmittel, die für den temporären Korrosionsschutz sowohl von Eisen- als auch von Nichteisenmetallen geeignet sein sollen, bestehen gemäß DE 101371130 bzw. US 6,752,934, B2 aus Stoffkombinationen, die neben einem Nitrit auch wasserunlösliche, mehrfach substituierte Phenole, aliphatische Ester einer Dihydroxy-Benzoesäure, und Tocopherol (2,5,7,8-Tetramethyl-2-(4',8',12'-trimethyltridecyl) Chroman-6-ol) enthalten. Mit den organischen Komponenten dieser Kombinationen wird der größte Oberflächenbereich der zu schützenden Metallteile mit einem hydrophobierenden Adsorptionsfilm überzogen, so dass die passivierende Wirkung des Nitrits nur an den wenigen Oberflächenbereichen der Metallteile, an denen keine Adsorption stattfand, zur Geltung kommen muss.

Da sowohl die mehrfach substituierten Phenole als auch die Tocopherole als Antioxidantien fungieren können, bleiben zudem Cu- und Silberbasiswerkstoffe innerhalb von Verpackungsmitteln, aus denen eine solche Stoffkombination emittiert wird, frei von schwarz oder dunkelgrau gefärbten Anlauffilmen. Voraussetzung dafür ist allerdings zum einen, dass die Oberflächen der zu schützenden Metallteile zum Zeitpunkt des Verpackens in einem trockenen, hydrophobierbaren Zustand vorliegen und im Verpackungsraum eine möglichst niedrige relative Luftfeuchtigkeit (≤ 60 % bei 20 °C) vorherrscht. Weiterhin ist zu gewährleisten, dass aus dem betreffenden Verpackungsmittel nicht nur das Nitrit, sondern eben auch die Antioxidantien sublimieren und auf den zu schützenden Metalloberflächen als Dünnfilm adsorbiert werden. Obwohl dafür die DE 101371130 vorsieht, dass als weitere Komponente ein bicyclisches Terpen oder aliphatisch substituiertes Naphthalin zugesetzt wird, die dazu beitragen soll, dass die bezeichneten VCI -Komponenten auch bei relativ niedrigen Temperaturen stets in ausreichendem Maß emittiert werden, ist einzukalkulieren, dass das nicht in jedem Fall realisiert wird. Es sind daher mit der Anwendung dieser Verpackungsmittel in Räumen mit höheren rel. Luftfeuchtigkeiten und bei Cu-Basiswerkstoffen Störungen des VCI-Korrosionsschutzes nicht ausgeschlossen.

Die Aufgabe der Erfindung ist es, gegenüber den oben aufgeführten Nachteilen herkömmlicher flüchtiger, über die Dampfphase wirkender Korrosionsinhibitoren verbesserte verdampfungs- oder sublimationsfähige korrosionsinhibierende Stoffe und Stoffkombinationen anzugeben, die insbesondere unter den praktisch interessierenden klimatischen Verhältnissen innerhalb von technischen Verpackungen und analogen geschlossenen Räumen mit hinreichender Geschwindigkeit aus einem entsprechenden Depot ausdampfen bzw. sublimieren und nach Adsorption und/oder Kondensation auf der Oberfläche von in diesem Raum befindlichen Metallen dort für Bedingungen sorgen, unter denen die üblichen Gebrauchsmetalle zuverlässig vor atmosphärischer Korrosion geschützt werden. Die Aufgabe der Erfindung ist es ferner, Verfahren zur Herstellung bzw. Verarbeitung solcher Stoffe und Stoffkombinationen für die Herstellung verbesserter VCI-Verpackungsmittel anzugeben.

Überraschend konnten diese Aufgaben durch insbesondere die Bereitstellung der Stoffkombination nach Anspruch 1 gelöst werden. Speziellere Aspekte und bevorzugte Ausführungsformen der Erfindung sind Gegenstand der weiteren Ansprüche.

Die Stoffkombination nach Anspruch 1 umfasst u.a. die folgenden Komponenten:
(1) mindestens eine aliphatische Monocarbonsäure mit C₆ bis C₁₀ und
(2) mindestens eine aliphatische Dicarbonsäure mit C₆ bis C₁₀.

Erfindungsgemäß wurde festgestellt, das die Kombination von mindestens einer Monocarbonsäure und mindestens einer Dicarbonsäure mittlerer Kettenlänge (mit C₆ bis C₁₀) ein gute korrosionsinhibierende Wirkung bei vielen Metallen ergibt. Die beiden Komponenten unterstützen sich in der Adsorption an mit Primäroxidschicht (POL) bedeckten Metalloberflächen synergistisch und stabilisieren dadurch diese Passivoxidschichten deutlich gegen den Einfluss von Feuchtluft und kondensiertem Wasser.

Die erfindungsgemäße korrosionsinhibierende Stoffkombination nach Anspruch 1 umfasst noch eine weitere Komponente (3), nämlich ein aromatisches primäres Amid, das überraschender Weise die Adsorption der betreffenden Mono- und Dicarbonsäuren an oxidbedeckten Metalloberflächen zusätzlich unterstützt.

Es ist bevorzugt, dass die erfindungsgemäße korrosionsinhibierende Stoffkombination neben den Mono- und Dicarbonsäuren oder, vorzugsweise, neben den Mono- und Dicarbonsäuren (1+2) und dem Amid (3) noch mindestens eine weitere Komponente (4) und/oder eine Komponente (5) enthält.

Bei der Komponente (5) handelt es es sich um ein Benzimidazol, vorzugsweise ein am Benzolring substituiertes Benzimidazol. Diese Komponente inhibiert überraschenderweise den Angriff des Luftsauerstoffs in neutralen wässrigen Lösungen bzw. Feuchtluft insbesondere an Cu-Metallen deutlich und sorgt damit dafür, dass sich die Korrosionsschutzwirkung der erfindungsgemäßen Stoffkombinationen gegenüber allen üblichen Gebrauchsmetallen im technischen Zustand voll entfalten kann.

Vorzugsweise enthält die erfindungsgemäße korrosionsinhibierende Stoffkombination neben den obigen Komponenten (1)+(2), (1)+(2)+(5) oder, vorzugsweise, (1)+(2)+(3) oder (1)+(2)+(3)+(5) noch als Komponente (4) einen aliphatischen Ester der Hydroxybenzoesäure, vorzugsweise 4-Hydroxybenzoesäure, der selbst in Feuchtluft gut sublimiert und als Träger der sublimierenden VCI-Komponenten fungieren kann. Diese Komponente ist insbesondere bei korrosionsinhibierenden Verpackungsmitteln auf Papierbasis von großem Nutzen, wird jedoch auch bei korrosionsinhibierenden Kunststoff-Folien vorteilhaft eingesetzt.

Die Mengenanteile der verschieden Komponenten können je nach dem speziellen Anwendungsgebiet variieren und geeignete Zusammensetzungen können unschwer von einem Fachmann auf diesem Gebiet durch Routineversuche festgestellt werden.

In einer bevorzugten Ausführungsform der Erfindung mit allen Komponenten (1) - (5) sind in der korrosionsinhibierenden Stoffkombination 1 bis 60 % Komponente (1), 1 bis 40 % Komponente (2), 0,5 bis 20 % Komponente (3), 0,5 bis 20 % Komponente (4) und 0,5 bis 20 % Komponente (5) enthalten.

Vorzugsweise wird die Zusammensetzung so eingestellt, dass im Temperaturbereich bis 80 °C bei rel. Luftfeuchtigkeiten (RH) ≤ 98 % alle Komponenten mit für den Dampfraum-Korrosionsschutz ausreichender Menge und Geschwindigkeit verdampfen oder sublimieren.

Einige geeignete, nicht-beschränkende Beispiele für die aliphatische Monocarbonsäure mit C₆ bis C₁₀, die geradkettig oder verzweigt, vorzugsweise geradkettig, gesättigt oder ungesättigt sein kann, sind Hexansäure (Capronsäure), 2,4-Hexadiensäure (Sorbinsäure), Heptansäure (Oenanthsäure), Octansäure (Caprylsäure),2-Ethylhexansäure, Nonansäure (Pelargonsäure), Isononansäure, Decansäure (Caprinsäure) oder eine ähnlich strukturierte, aliphatische Monocarbonsäure.

Einige geeignete, nicht-beschränkende Beispiele für die aliphatische Dicarbonsäure mit C₆ bis C₁₀, die geradkettig oder verzweigt, gesättigt oder ungesättigt sein kann, sind Hexandisäure (Adipinsäure), Heptandisäure (Pimelinsäure), Nonandisäure (Azelainsäure) Decandisäure (Sebacinsäure),oder eine ähnliche Dicarbonsäure.

Einige geeignete, nicht-beschränkende Beispiele für den aliphatischen Ester der Hydroxybenzoesäure, vorzugsweise der 4-Hydroxybenzoesäure, sind Methyl-4-hydroxybenzoat (Methylparaben), Ethyl-4-hydroxybenzoat (Ethylparaben) oder ein ähnlich strukturierter aliphatischen Ester.

Einige geeignete, nicht-beschränkende Beispiele für das primäre aromatische Amid sind Benzamid, 2-Aminobenzamid, 4-Aminobenzamid, Benzolaminoamid (N-Benzylharnstoff), Pyridin-3-carbonsäureamid (Nicotinsäureamid) oder ein ähnlich strukturiertes, primäres aromatisches Amid. Andere geeignete Amide können vom Fachmann unschwer durch Routineversuche ermittelt werden.

Ein bevorzugtes, nicht-beschränkendes Beispiel für das Benzimidazol ist ein am Benzolring substituiertes Benzimidazol wie 5,6-Dimethylbenzimidazol oder ein ähnlich strukturiertes, substituiertes Benzimidazol. Andere geeignete Verbindungen können vom Fachmann unschwer durch Routineversuche ermittelt werden.

Die erfindungsgemäßen korrosionsinhibierenden Stoffkombinationen können neben einer oder mehreren der oben genannten Komponenten (1+2) bis (5) zusätzlich auch bereits als Dampfphasen-Korrosionsinhibitoren eingeführte Substanzen einzeln oder als Gemisch derselben enthalten. Beispielweise könnte für einige Anwendungen (z.B. zum Schutz von Kupfer oder Kupferlegierungen) statt oder zusätzlich zu der Benzimidazol-Komponente (5) auch ein Triazol oder C-substituiertes Triazol, z.B. ein Benzotriazol oder Tolyltriazol, verwendet werden.

Die erfindungsgemäße Stoffkombination kann auf einfache Weise dadurch hergestellt werden, dass die aus (1) bis (5) ausgewählten Komponenten in den gewünschten Anteilen (plus eventuelle zusätzliche Komponenten) miteinander vermischt werden.

In einer bevorzugten Ausführungsform werden bei diesem Verfahren 1 bis 60 % Komponente (1), 1 bis 40 % Komponente (2), 0,5 bis 20 % Komponente (3), 0,5 bis 20 % Komponente (4) und 0,5 bis 20 % Komponente (5) miteinander vermengt.

Erfindungsgemäß werden diese Stoffkombinationen direkt in Form entsprechender Gemische zum Einsatz gebracht oder nach an sich bekannten Methoden im Rahmen der Herstellung von VCI-Verpackungsmitteln eingearbeitet, so dass diese Verpackungsmittel als VCI-Depot fungieren und die Korrosionsschutzeigenschaften der erfindungsgemäßen Stoffkombinationen besonders vorteilhaft zur Entfaltung kommen können.

Für die Einbringung der erfindungsgemäßen Stoffkombinationen in VCI-Depots oder in als solche fungierende Verpackungsmittel ist es zweckmäßig, die einzelnen Stoffe im wasserfreien Zustand zunächst nach an sich bekannten Methoden in den oben angegebenen Verhältnissen möglichst intensiv untereinander zu vermischen.

Die erfindungsgemäßen Stoffkombinationen werden vor allem verwendet, um die breite Palette der üblichen Gebrauchsmetalle, einschließlich Eisen, Chrom, Nickel, Zinn, Zink, Aluminium, Kupfer, Magnesium und deren Legierungen, in Verpackungen, während des Transports und während der Lagerung in analogen geschlossenen Räumen vor atmosphärischer Korrosion zu schützen. Gerade diese vielseitige Anwendbarkeit für ein breites Spektrum an Metallen bzw. Metalllegierungen stellt einen besonderen Vorteil der Erfindung dar.

Die erfindungsgemäße korrosionsinhibierende Stoffkombination kann als Dampfphasen-Korrosionsinhibitor (VPCI, VCI) in Form von feinpulvrigen Gemischen bei der Verpackung, Lagerung oder dem Transport von metallischen Materialien eingesetzt werden.

Die korrosionsinhibierende Stoffkombination kann jedoch auch in Beschichtungsstoffe inkorporiert werden, um damit Trägermaterialien, wie Papier, Karton, Schaumstoffe und ähnliche Flächengebilde im Rahmen der Herstellung von VPCI- bzw. VCI-emittierenden Verpackungsmitteln zu beschichten und diese anschließend innerhalb von Verpackungs-, Lagerungs- und Transportvorgängen anzuwenden.

Die erfindungsgemäße korrosionsinhibierende Stoffkombination ermöglicht die Bereitstellung von Korrosionsinhibitoren, die sich in Form von Gemischen mit polymeren Materialien (z.B. Polyolefine, Polyester) zu Wirkstoffkonzentraten (Masterbatches) und flächigen Finalprodukten schmelz-, spritz- oder blasextrudieren lassen, so dass VPCI-emittierende Folien oder Hartkunststoffe entstehen, deren Emissionsvermögen von verdampfungs- oder sublimationsfähigen Korrosionsinhibitoren (VPCI, VCI) sich innerhalb von Verpackungs-, Lagerungs- und Transportvorgängen zum Korrosionsschutz von Metallen anwenden lässt.

Die erfindungsgemäßen Stoffkombinationen sind grundsätzlich nitrit- und aminfrei und bestehen vorteilhafterweise ausschließlich aus Substanzen, die sich nach an sich bekannten Methoden leicht und gefahrlos verarbeiten lassen und in den anzuwendenden Mengenanteilen als nichttoxisch und die Umwelt nicht gefährdend einzustufen sind. Sie eignen sich darum besonders zur Herstellung von korrosionsschützenden Verpackungsmitteln, die in großem Umfang kostengünstig und ohne Gefährdungspotential anwendbar sind.

Der Anmeldungsgegenstand wird durch die nachfolgenden, nichteinschränkenden Beispiele näher erläutert. Wie daraus auch hervorgeht, richten sich Art und Mengenanteil der einzelnen Komponenten im erfindungsgemäßen Gemisch im jeweiligen VCI-Depot nur nach den Herstellungsbedingungen des betreffenden VCI-emittierenden Erzeugnisses und nicht nach der Art des vor Korrosion zu schützenden Metalls.

### Beispiel 1:

Aus den wasserfreien Substanzen wurde die folgende erfindungsgemäße Stoffkombination VCI (1) bereitet:

| | |
|---|---|
| 20,0 Masse-% | Octansäure |
| 15,0 Masse-% | 2,4-Hexadiensäure |
| 15,0 Masse-% | Hexandisäure (Adipinsäure) |
| 10,0 Masse-% | 2-Aminobenzamid |
| 5,0 Masse-% | 5,6-Dimethylbenzimidazol |
| 35,0 Masse-% | inerter Füllstoff (Kieselgel) |

Jeweils 5 g dieses Gemisches wurden auf dem Boden eines 25 ml Becherglases breit verteilt und dieses in ein Weckglas (Inhalt 1 1) gestellt. Neben dem Becherglas wurde ein zweites mit 10 ml entionisiertem Wasser positioniert. Dann wurde ein Prüfkörpergestell eingebracht, an dem jeweils 4 Stück gereinigte Prüfkörper unter 45° Neigung zur Waagrechten positioniert worden waren. Diese bestanden bei jedem Ansatz aus den Werkstoffen niedriglegierter Stahl 100Cr6, Gußeisen GGG25, AlMg1SiCu und Cu-SF, frei von Anlauffilmen und Ablagerungen.

Die Weckgläser mit den Metallproben, dem entionisierten Wasser und der erfindungsgemäßen Stoffkombination wurden dicht verschlossen, wozu jeweils ein Deckel mit Dichtring sowie ein Spannbügel benutzt wurden. Nach 16 h Wartezeit bei Raumtemperatur konnte die sog. Aufbauphase der VCI-Komponenten innerhalb des Gefäßes als abgeschlossen betrachtet werden. Die einzelnen Weckgläser wurden dann für 16 h in Wärmeschränke bei 40 °C exponiert, anschließend wieder 8 h bei Raumtemperatur. Diese zyklische Belastung (1 Zyklus = 24 h) wurde so lange wiederholt, bis an den Prüfkörpern durch die Glaswandung hindurch visuelle Veränderungen festzustellen waren oder eine Maximalbelastung von 42 Zyklen abgewartet.

Nach Versuchsende wurden die Prüfkörper außerhalb der Weckgläser im Detail visuell beurteilt.

In Referenz zu der erfindungsgemäßen Stoffmischung VCI (1) wurden 5 g - Portionen eines handelsüblichen VCI-Pulvers in gleicher Weise geprüft. Dieses Referenz-VCI-Pulver (R1) bestand aus

| | |
|---|---|
| 54,0 Masse-% | Monoethanolaminbenzoat |
| 23,0 Masse-% | 1H-Benzotriazol |
| 23,0 Masse-% | Füllstoff (Kieselgel) |

### Ergebnis der Prüfung:

Die Prüfkörper, die zusammen mit der erfindungsgemäßen Stoffmischung VCI (1) eingesetzt worden waren, hatten bei allen 4 Parallelansätzen nach 42 Zyklen ein unverändertes Aussehen.

Bei den Ansätzen mit dem handelsüblichen Referenzsystem R1 zeigten die Prüfkörper aus GGG25 nach 8 bis 10 Zyklen erste punktförmige Roststellen, die sich bei Fortsetzung der Tests schnell vergrößerten. An den Stahlringen konnte nach 11 bis 12 Zyklen Kantenrost beobachtet werden.

Die Al-Prüfkörper hatten nach 42 Zyklen insbesondere in den Kantenbereichen Ansätze von Weißrost, die mit FTIR-Mikroskopie (PerkinElmer-FTIR-Meßplatz Spectrum One FTIR mit Auto-Image Mikroskopsystem in Verbindung mit einer Diamantzelle) als Aluminiumoxid-Hydroxid (AlOOH) identifiziert werden konnten.

Das Referenzsystem R1 ist folglich lediglich zum VCI-Korrosionsschutz von Cu-Basiswerkstoffen geeignet. Aus dem beschriebenen Beispiel kommt im Vergleich dazu der VCI-Effekt der erfindungsgemäßen Stoffkombination VCI (1) gegenüber den üblichen Gebrauchsmetallen sehr vorteilhaft zur Geltung.

### Beispiel 2

Aus den wasserfreien Substanzen wurde die folgende erfindungsgemäße Stoffkombination bereitet:

| | |
|---|---|
| 25,0 Masse-% | Octansäure |
| 15,0 Masse-% | 2,4-Hexadiensäure |
| 15,0 Masse-% | Hexandisäure (Adipinsäure) |
| 5,0 Masse-% | Methylparaben |
| 15,0 Masse-% | Nicotinsäureamid |
| 2,5 Masse-% | 5,6-Dimethylbenzimidazol |
| 21,5 Masse-% | Kaliumhydroxid |
| 1,0 Masse-% | Natrosol^{®} 250 GR (Hydroxyethylcellulose, Dispergierhilfsmittel, Verdicker) |

und davon durch Zusatz von entionisiertem Wasser eine 25%ige Dispersion hergestellt.

Mit dieser Zubereitung wurden Papierbahnen (Kraftpapier 70 g/m²) beschichtet, wobei ein Nassauftrag von 15 g /m² realisiert wurde. Unmittelbar nach Trocknen des so hergestellten erfindungsgemäßen VCI-Papiers VCI (2) an Luft wurde es im Vergleich zu einem als Referenzsystem (R2) dienenden handelsüblichen Korrosionsschutzpapier auf seine korrosionsschützende Wirkung getestet. Das Referenzsystem (R2) enthielt nach chemischer Analyse die Wirkstoffe Ethanolaminbenzoat, Natriumbenzoat / Benzoesäure, Benzotriazol und Harnstoff, wobei der Gesamtanteil etwa doppelt so hoch wie die erfindungsgemäße Stoffkombination war.

Es kamen analog Beispiel 1 wieder Prüfkörper aus niedriglegiertem Stahl 100Cr6, Gußeisen GGG25, AlMg1SiCu und Cu-SF zur Anwendung und auch das Prüfritual war analog dem in Beispiel 1 beschriebenen. Der einzige Unterschied war nun, dass an Stelle der VCI-Pulvermischungen jetzt die einzelnen Weckgläser mit dem VCI-Papier ausgekleidet wurden, jeweils 1 kreisrunder Zuschnitt mit ∅ 8 cm am Boden, ein Mantel von 13 x 28 cm und ein abermals kreisrunder Zuschnitt mit ∅ 9 cm für den Deckel. Dann wurden das Prüfkörpergestell und das Becherglas mit dem VE-Wasser plaziert, das Weckglas geschlossen und die Klimabelastung wie im Beispiel 1 beschrieben, durchgeführt.

Da jedoch nunmehr der Zustand der Prüflinge nicht durch die Glaswand beobachtet werden konnte, wurden die Ansätze zu diesem Zweck nach jedem 5. Zyklus während der Raumtemperatur-Phase kurzzeitig geöffnet. Waren visuell keine Veränderungen festzustellen, wurde die Klimabelastung in der beschriebenen Weise fortgesetzt.

### Ergebnis der Prüfung:

Die verschiedenen Prüfkörper , die zusammen mit dem auf Basis der erfindungsgemäßen Stoffmischung hergestellten VCI-Papier VCI (2) eingesetzt worden waren, hatten bei allen 3 Parallelansätzen nach 42 Zyklen ein unverändertes Aussehen.

Bei den Ansätzen mit dem handelsüblichen Referenzsystem R2 zeigten die Prüfkörper aus GGG25 bei der Inspektion nach 10 Zyklen erste punktförmige Roststellen, die sich bei Fortsetzung der Tests schnell vergrößerten. An den Stahlringen konnte nach 15 Zyklen Kantenrost beobachtet werden.

Die Prüfkörper aus der Al-Legierung hatten nach 30 Zyklen an den Kanten erste Ansätze von Weißrost, die sich bei Belastung bis 40 Zyklen deutlich vergrößerten. Die Prüfkörper aus Cu-SF waren nach 40 Zyklen mit einem leichten dunkelgrau gefärbten, nicht abwischbaren Anlauffilm überzogen.

Das Referenzsystem R2 ist folglich nur zum VCI-Korrosionsschutz von Cu-Basiswerkstoffen bedingt geeignet, während das auf Basis der erfindungsgemäßen Stoffkombination hergestellte VCI-Papier VCI (2), wie das Beispiel zeigt, gegenüber den üblichen Gebrauchsmetallen selbst unter den extremen Feuchtluftbedingungen bei Langzeitbeanspruchung zuverlässige VCI-Eigenschaften entfaltet.

### Beispiel 3:

| | |
|---|---|
| 12,7 Masse-% | Octansäure |
| 8,6 Masse-% | Nonansäure |
| 11,2 Masse-% | Dekandisäure |
| 11,2 Masse-% | 4-Aminobenzamid |
| 6,8 Masse-% | Methylparaben |
| | |
| 14,1 Masse-% | Natriumoctanoat |
| 14,3 Masse-% | Kieselsäure |
| 6,3 Masse-% | Silikat (Antiblock-Additiv) |
| 8,1 Masse-% | Calciumcarbonat |
| 6,7 Masse-% | IRGANOX^{®} B 215 (Stabilisator) |

26,5 Masse-% dieses Gemisches wurden mit 73,5 Masse-% eines EBA (Ethylen-Butylacrylat-Copolymer) vermischt und zu einem VCI-Masterbatch verarbeitet. Dazu wurde eine Laborextrusionsanlage Rheocord 90 (HAAKE) mit einem gleichläufigen Doppelschneckenextruder verwendet. Mit der Schneckendrehzahl von 65 bis 80 U/min wurde bei Zylindertemperaturen von 110 bis 135 °C und einer Düsentemperatur von 135 °C extrudiert und durch Kaltabschlag granuliert. Dieses granulierte VCI-Masterbatch wurde durch Blasfolienextrusion zu VCI-Folien weiterverarbeitet, wozu die Laborextrusionsanlage Rheocord 90 (HAAKE) mit einem Einfachschneckenextruder und Ringdüse genutzt wurde. Nach Durchmischen von 2,5 Masse-% des VCI-Masterbatches mit 97,5 Masse-% eines für die Blasfolienherstellung geeigneten PE-LD wurde bei Zylindertemperaturen von 165 - 190°C und einer Düsentemperatur von 195°C gearbeitet, wobei die Schneckendrehzahl bei 100 U/min lag. Es wurde eine VCI-Folie mit einer mittleren Schichtdicke von 100 µm hergestellt (VCI (3)).

Die so unter Verwendung einer erfindungsgemäßen Stoffkombination hergestellte VCI-Folie VCI (3) wurde zu Beuteln verarbeitet (Zuschnitt und Verschweißen der überlagerten Seitennähte). Bleche der Werkstoffe Kohlenstoffstahl **DC03,** kaltgewalzt, (90 x 50 x 1) mm³ (Q-Panel, Q-Panel Lab Products, Cleveland, Ohio 44145 USA), feinkornverzinkter Stahl (**ZnSt**) mit 18 µm Zn-Auflage und der Aluminiumlegierung **Al7075** jeweils gleicher Größe wie die Bleche DC03 wurden zusammen innerhalb von Distanzrahmen aus dem chemisch inerten Kunststoff PMMA (Polymethyl-Methacrylat) parallel mit ca. 1 cm Abstand zueinander eingeordnet und diese Anordnungen jeweils separat in einen vorgefertigten Beutel eingeschweißt. Mit der Positionierung der verschiedenen Prüfbleche in Kunststoff-Distanzrahmen wurde gewährleistet, daß die VCI-Komponenten ihre Wirkung bestimmungsgemäß nur über die Gasphase realisieren konnten.

Als Referenzsystem (R3) kam eine handelsübliche VCI-Folie zum Einsatz, die gemäß chemischer Analyse 2-Amino-2-Methyl-1-Propanol (AMP), Octansäure, 3.5.5 Trimethylhexansäure, zusammen mit Calciumcarbonat und Talkum enthielt, in Summe etwa die gleiche Menge der drei erstgenannten Stoffe im Vergleich zu den VCI-Komponenten in der erfindungsgemäßen Stoffkombination VCI (3), und ebenfalls eine Schichtdicke von 100 µm hatte. Als Referenzsystem (R3') wurden noch artgleiche Verpackungen mit VCI-freier PE-LD Folie, 100 µm, zubereitet, um den auf die Barrierewirkung der Folie mit 100 µm entfallenden Anteil am Korrosionsschutzeffekt getrennt zu erfassen.

Alle angefertigten Modellverpackungen wurden noch ca. 5 h bei Raumtemperatur zwischengelagert, um in den mit VCI-Folie zubereiteten Verpackungen die Einstellung einer an VCI-Komponenten gesättigten Atmosphäre (Aufbauphase !) zu gewährleisten.

Dann erfolgte ihre Überführung in verschiedene Klimaprüfschränke vom Typ VC 4033 (VÖTSCH Industrietechnik GmbH, D-72304 Balingen), die auf das Feuchtluft-Temperatur-Wechselklima nach DIN EN 60068-2-30 eingestellt waren. Für die zu prüfenden Folien VCI (3), R3 und R3' wurden jeweils separate Klimaprüfschränke verwendet, um für die exponierten Muster gegenseitige Beeinflussungen auszuschließen.

Bei der angewandten Klimabelastung besteht ein 24-h-Zyklus bekanntlich aus folgenden Etappen: 6 h 25°C und (RH) = 98%, 3 h Aufheizphase von 25 auf 55 °C bei (RH) = 95%, 9 h 55°C bei (RH) = 93% und 6 h Abkühlphase von 55 auf 25 °C bei (RH) = 98% und 3 h 25°C und (RH) = 98%.

Mit dieser Feuchtluft-Temperatur-Wechselbelastung werden erfahrungsgemäß die klimatische Bedingungen eines Überseetransports zeitraffend gut nachgestellt.

Die Oberflächen der Prüfbleche mit Folienumverpackung wurden nach jedem Zyklus (innerhalb der stabilen 25 °C - Phase) durch das transparente Folienmaterial hindurch inspiziert. Sobald an einzelnen Prüfblechen sichtbare Korrosionserscheinungen festzustellen waren, wurde die bis dahin vergangene Zyklenzahl registriert und danach die Klimabelastung solange fortgesetzt, bis alle Prüfbleche einer Modellverpackung betroffen waren, oder das Ausmaß der Korrosion einzelner Prüfbleche mittels visueller Inspektion durch die Folienwandungen nicht mehr beurteilt werden konnte. Nach Ende der Tests wurde das Verpackungsmaterial entfernt und der Oberflächenzustand jedes Prüfblechs abschließend bewertet.

### Ergebnis der Prüfung:

**Tabelle 1: Ergebnisse der Feuchtluft- Temperatur-Wechselbeanspruchung von Modellverpackungen (Mittelwerte Zyklenzahl aus jeweils 3 Parallelproben)**

| **Verpackungen** | **Zyklenzahl nach DIN EN 60068-2-30** | | **Oberflächenzustand der Prüfbleche** |
|---|---|---|---|
| R3' | | 6 | DC03, erste Rostflecken in Kantenbereichen; |
| | | 9 | ZnSt, Flecken Weißrost im Kantenbereich; |
| | | 12 | A1 7075, kleine weiße Punkte auf Flächen; |
| | | 18 | Abbruch der Klimabelastung, da Korrosionserscheinungen an allen Blechen deutlicher; |
| VCI (3) | nach 40 beendet | | Alle Prüfbleche noch frei von sichtbaren Veränderungen |
| R3 | | 15 | A1 7075, kleine weiße Punkte; |
| | | 18 | ZnSt, Flecken Weißrost im Kantenbereich; |
| | | 22 | DC03, Rost punktuell über die Flächen verteilt; |
| | | 28 | Abbruch der Klimabelastung, dabei weitere Fortschritte der Korrosion an Prüfblechen visuell nicht mehr sicher zu bewerten; |

Dieses Beispiel dokumentiert die Überlegenheit der erfindungsgemäßen Stoffkombination als hochleistungsfähiges VCI-Folien-Verpackungsmittel für den Korrosionsschutz üblicher Gebrauchsmetalle, während das Referenzsystem R3 nur bei Stahl eine zufriedenstellende Schutzwirkung entfalten konnte, bei den Nichteisenmetall-Proben dagegen kaum Unterschiede zu dem VCI-freien Referenzsystem R3', bestehend aus einer üblichen PE-LD Folie gleicher Schichtdicke von 100 µm, offenbar wurden.

### Beispiel 4:

| | |
|---|---|
| 9,4 Masse-% | Nonansäure |
| 10,6 Masse-% | Dekandisäure |
| 11,2 Masse-% | Methylparaben |
| 9,4 Masse-% | 2-Aminobenzamid |
| 5,0 Masse-% | 5,6-Dimethylbenzimidazol |
| | |
| 25,4 Masse-% | Kieselsäure |
| 25,2 Masse-% | Silikat (Antiblock-Additiv) |
| 3,8 Masse-% | IRGANOX^{®} B 215 (Stabilisator) |

26,5 Masse-% dieses Gemisches wurden mit 73,5 Masse-% eines EBA (Ethylen-Butylacrylat-Copolymer) vermischt und auf gleiche Weise, wie in Beispiel 3 beschrieben, wieder zu einem VCI-Masterbatch verarbeitet.

Anschließend wurden davon wieder 2,5 Masse-% mit 97,5 Masse-% eines für die Blasfolienherstellung geeigneten PE-LD vermischt und, wie bereits in Beispiel 3 beschrieben, zu einer VCI-Folie mit einer mittleren Schichtdicke von 100 µm verarbeitet (VCI (4)).

Die so unter Verwendung einer erfindungsgemäßen Stoffkombination hergestellte VCI-Folie VCI (4) wurde ebenfalls zu Beuteln verarbeitet (Zuschnitt und Verschweißen der überlagerten Seitennähte). Für die Zubereitung der Modellverpackungen wurden nunmehr neben den Prüfblechen der Werkstoffe Kohlenstoffstahl **DC03,** kaltgewalzt, (90 x 50 x 1) mm³ (Q-Panel, Q-Panel Lab Products, Cleveland, Ohio 44145 USA), feinkornverzinkter Stahl **(ZnSt)** mit 18 µm Zn-Auflage und Aluminiumlegierung **Al7075** auch Bleche aus Kupfer **Cu-SF** einbezogen und wieder auf die gleiche Weise, wie in Beispiel 3 beschrieben, vorbereitet .

Als Referenzsystem (R4) kam nunmehr eine handelsübliche VCI-Folie zum Einsatz, die gerade für den Schutz sog. Multimetallkombinationen, die auch Kupferbasiswerkstoffe enthalten, empfohlen wird. R4 enthielt gemäß chemischer Analyse Cyclohexylaminbenzoat, Natriumnitrit und Benzotriazol, in Summe etwa die gleiche Menge im Vergleich zu den VCI-Komponenten in der erfindungsgemäßen Stoffkombination VCI (4), und hatte ebenfalls eine Schichtdicke von 100 µm. Als Referenzsystem (R4') wurden noch artgleiche Verpackungen mit VCI-freier PE-LD Folie, 100 µm, zubereitet, um wieder den auf die Barrierewirkung der Folie mit 100 µm entfallenden Anteil am Korrosionsschutzeffekt getrennt zu erfassen.

Alle angefertigten Modellverpackungen wurden wieder ca. 5 h bei Raumtemperatur zwischengelagert, um in den mit VCI-Folie zubereiteten Verpackungen die Einstellung einer an VCI-Komponenten gesättigten Atmosphäre (Aufbauphase !) zu gewährleisten.

Dann erfolgte ihre Überführung analog dem Beispiel 3 wieder in verschiedene Klimaprüfschränke vom Typ VC 4033, die ebenfalls auf das Feuchtluft-Temperatur-Wechselklima nach DIN EN 60068-2-30 eingestellt waren. Für die zu prüfenden Folien VCI (4), R4 und R4' wurden wieder jeweils separate Klimaprüfschränke verwendet, um für die exponierten Muster gegenseitige Beeinflussungen auszuschließen.

Die übrige Versuchsdurchführung entsprach der in Beispiel 3 beschriebenen.

### Ergebnis der Prüfung:

**Tabelle 2: Ergebnisse der Feuchtluft- Temperatur-Wechselbeanspruchung von Modellverpackungen (Mittelwerte Zyklenzahl aus jeweils 3 Parallelproben)**

| **Verpackungen** | **Zyklenzahl nach DIN EN 60068-2-30** | | **Oberflächenzustand der Prüfbleche** |
|---|---|---|---|
| R4' | | 6 | DC03, erste Rostflecken in Kantenbereichen; |
| | | 9 | ZnSt, Flecken Weißrost im Kantenbereich; |
| | | 12 | A1 7075, kleine weiße Punkte auf Flächen; |
| | | 15 | Cu-SF, fleckenhaft dunkelgrauer Anlauffilm; |
| | | 18 | Abbruch der Klimabelastung, da Korrosionserscheinungen an allen Blechen deutlicher; |
| VCI (4) | nach 40 beendet | | Alle Prüfbleche noch frei von sichtbaren Veränderungen |
| R4 | | 12 | Cu-SF, fleckenhaft dunkelgrauer Anlauffilm; |
| | | 19 | A1 7075, kleine weiße Punkte; |
| | | 22 | ZnSt, Flecken Weißrost im Kantenbereich; |
| | | 30 | Abbruch der Klimabelastung, dabei nur DC03 noch frei von Korrosionserscheinungen; |

Dieses Beispiel dokumentiert ebenfalls die Überlegenheit der erfindungsgemäßen Stoffkombination. Gerade die Prüfbleche des Cu-Werkstoffs Cu-SF zeigten in den Verpackungen des Referenzsystems R4 sogar frühzeitiger einen Anlauffilm als in den Verpackungen des VCI-freien Referenzsystems R4' gleicher Foliendicke von 100 µm. Das Referenzsystem R4 konnte nur bei Stahl eine bemerkenswerte Schutzwirkung entfalten.

Dagegen erwies sich die mit der erfindungsgemäßen Stoffkombination hergestellte Folie VCI (4) zum Korrosionsschutz für alle exponierten Werkstoffe als hervorragend geeignet. Die verschiedenartigen Prüfbleche waren auch nach einer vergleichsweise hohen Klimabelastung von 40 Zyklen noch ohne Korrosionserscheinungen. Diese Folie VCI (4) ist somit gerade für die Anwendung als hochleistungsfähiges Korrosionsschutzmittel bei sog. Multimetallkombinationen, bestehend aus üblichen Stählen, Aluminium- Zink- und Kupferbasiswerkstoffen prädestiniert.

## Patentansprüche

1. Verdampfungs- oder sublimationsfähige, korrosionsinhibierende Stoffkombination, die enthält:
(1) mindestens eine aliphatische Monocarbonsäure mit C₆ bis C₁₀,
(2) mindestens eine aliphatische Dicarbonsäure mit C₆ bis C₁₀,
(3) ein primäres aromatisches Amid, und
(4) einen aliphatischen Ester der Hydroxybenzoesäure.

2. Korrosionsinhibierende Stoffkombination gemäß Anspruch 1, welche ferner noch (5) ein Benzimidazol enthält.

3. Korrosionsinhibierende Stoffkombination gemäß Anspruch 2, wobei das Benzimidazol ein am Benzolring substituiertes Benzimidazol ist.

4. Korrosionsinhibierende Stoffkombination gemäß einem der Ansprüche 1 bis 3, wobei die Hydroxybenzoesäure 4-Hydroxybenzoesäure ist.

5. Korrosionsinhibierende Stoffkombination gemäß einem der Ansprüche 2-4, in der 1 bis 60 % Komponente (1), 1 bis 40 % Komponente (2), 0,5 bis 20 % Komponente (3), 0,5 bis 20 % Komponente (4) und 0,5 bis 20 % Komponente (5) enthalten sind.

6. Korrosionsinhibierende Stoffkombination gemäß einem der vorhergehenden Ansprüche, bei der im Temperaturbereich bis 80 °C bei rel. Luftfeuchtigkeiten (RH) ≤ 98 % alle Komponenten verdampfungs- oder sublimationsfähig sind.

7. Korrosionsinhibierende Stoffkombination gemäß einem der vorhergehenden Ansprüche, bei der die aliphatische Monocarbonsäure mit C₆ bis C₁₀ aus Hexansäure (Capronsäure), 2,4-Hexadiensäure (Sorbinsäure), Heptansäure (Oenanthsäure), Octansäure (Caprylsäure), 2-Ethylhexansäure, Nonansäure (Pelargonsäure), Isononansäure, Decansäure (Caprinsäure) oder einer Kombination davon ausgewählt ist.

8. Korrosionsinhibierende Stoffkombination gemäß einem der vorhergehenden Ansprüche, bei der die aliphatische Dicarbonsäure aus Hexandisäure (Adipinsäure), Heptandisäure (Pimelinsäure), Nonandisäure (Azelainsäure), Decandisäure (Sebacinsäure) oder einer Kombination davon ausgewählt ist.

9. Korrosionsinhibierende Stoffkombination gemäß einem der Ansprüche 1-8, bei der der aliphatische Ester der 4-Hydroxybenzoesäure aus Methyl-4-hydroxybenzoat (Methylparaben), Ethyl-4-hydroxybenzoat (Ethylparaben) oder einer Kombination davon ausgewählt ist.

10. Korrosionsinhibierende Stoffkombination gemäß einem der vorhergehenden Ansprüche, bei der das aromatische Amid aus Benzamid, 2-Aminobenzamid, 4-Aminobenzamid, Benzolaminoamid (N-Benzylharnstoff), Pyridin-3-carbonsäureamid (Nicotinsäureamid) oder einer Kombination davon ausgewählt ist.

11. Korrosionsinhibierende Stoffkombination gemäß einem der vorhergehenden Ansprüche 2-10, bei der das Benzimidazol aus 5,6-Dimethylbenzimidazol oder einer Kombination davon mit einem anderen am Benzolring substituierten Benzimidazol ausgewählt ist.

12. Korrosionsinhibierende Stoffkombination gemäß einem der vorhergehenden Ansprüche, die zusätzlich noch andere als Dampfphasen-Korrosionsinhibitoren wirksame Substanzen einzeln oder als Gemisch derselben enthält.

13. Verfahren zur Herstellung einer verdampfungs- oder sublimationsfähigen, korrosionsinhibierenden Stoffkombination, bei der (1) eine oder mehrere aliphatische Carbonsäuren mit C₆ bis C₁₀, (2) eine oder mehrere aliphatische Dicarbonsäuren mit C₆ bis C₁₀, (3) ein primäres aromatisches Amid oder mehrere, (4) ein aliphatischer Ester der Hydroxybenzoesäure und optional (5) ein Benzimidazol miteinander vermischt werden.

14. Verfahren gemäß Anspruch 13, bei dem 1 bis 60 % Komponente (1), 1 bis 40 % Komponente (2), 0,5 bis 20 % Komponente (3), 0,5 bis 20 % Komponente (4) und 0,5 bis 20 % Komponente (5) vermengt werden.

15. Verwendung einer korrosionsinhibierenden Stoffkombination gemäß einem der Ansprüche 1 bis 12 als Dampfphasen-Korrosionsinhibitor (VPCI, VCI) in Form von feinpulvrigen Gemischen bei der Verpackung, Lagerung oder dem Transport von metallischen Materialien.

16. Verwendung einer korrosionsinhibierenden Stoffkombination gemäß einem der Ansprüche 1 bis 12 zur Inkorporierung in Beschichtungsstoffe.

17. Verwendung einer korrosionsinhibierenden Stoffkombination gemäß einem der Ansprüche 1 bis 12 in Form von Gemischen mit polymeren Materialien, z.B. Polyolefinen oder Polyester.

18. Verwendung einer korrosionsinhibierenden Stoffkombination gemäß einem der Ansprüche 1 bis 12 zum Korrosionsschutz üblicher Gebrauchsmetalle, wie Eisen, Chrom, Nickel, Zinn, Zink, Aluminium, Kupfer, Magnesium und deren Legierungen.

## Claims

1. A corrosion-inhibiting substance combination capable of evaporating or sublimating, which contains:
(1) at least one C₆ to C₁₀ aliphatic monocarboxylic acid,
(2) at least one C₆ to C₁₀ aliphatic dicarboxylic acid,
(3) a primary aromatic amide, and
(4) an aliphatic ester of hydroxybenzoic acid.

2. The corrosion-inhibiting substance combination according to claim 1, which furthermore contains (5) a benzimidazole.

3. The corrosion-inhibiting substance combination according to claim 2, wherein the benzimidazole is a benzimidazole substituted on the benzene ring.

4. The corrosion-inhibiting substance combination according to any one of claims 1 to 3, wherein the hydroxybenzoic acid is 4-hydroxybenzoic acid.

5. The corrosion-inhibiting substance combination according to any one of claims 2-4, which contains 1 to 60% component (1), 1 to 40% component (2), 0.5 to 20% component (3), 0.5 to 20% component (4) and 0.5 to 20% component (5).

6. The corrosion-inhibiting substance combination according to any one of the preceding claims, in which all the components are capable of evaporating or sublimating in the temperature range up to 80°C at relative humidities (RH) ≤ 98%.

7. The corrosion-inhibiting substance combination according to any one of the preceding claims, in which the C₆ to C₁₀ aliphatic monocarboxylic acid is selected from hexanoic acid (capronic acid), 2,4-hexadienoic acid (sorbic acid), heptanoic acid (enanthic acid), octanoic acid (caprylic acid), 2-ethylhexanoic acid, nonanoic acid (pelargonic acid), isononanoic acid, decanoic acid (capric acid) or a combination thereof.

8. The corrosion-inhibiting substance combination according to any one of the preceding claims, in which the aliphatic dicarboxylic acid is selected from hexanedioic acid (adipic acid), heptanedioic acid (pimelic acid), nonanedioic acid (azelaic acid), decanedioic acid (sebacic acid) or a combination thereof.

9. The corrosion-inhibiting substance combination according to any one of claims 1-8, in which the aliphatic ester of 4-hydroxybenzoic acid is selected from methyl 4-hydroxybenzoate (methylparaben), ethyl 4-hydroxybenzoate (ethylparaben) or a combination thereof.

10. The corrosion-inhibiting substance combination according to any one of the preceding claims, in which the aromatic amide is selected from benzamide, 2-aminobenzamide, 4-aminobenzamide, benzene aminoamide (N-benzylurea), pyridine-3-carboxamide (nicotinamide) or a combination thereof.

11. The corrosion-inhibiting substance combination according to any one of claims 2-10, in which the benzimidazole is selected from 5,6-dimethylbenzimidazole or a combination thereof with another benzimidazole substituted on the benzene ring.

12. The corrosion-inhibiting substance combination according to any one of the preceding claims, which additionally contains other substances effective as vapor phase corrosion inhibitors, individually or as a mixture.

13. A method for producing a corrosion-inhibiting substance combination capable of evaporating or sublimating, in which (1) one or more C₆ to C₁₀ aliphatic carboxylic acids, (2) one or more C₆ to C₁₀ aliphatic dicarboxylic acids, (3) one primary aromatic amide or more, (4) an aliphatic ester of hydroxybenzoic acid and optionally (5) a benzimidazole are mixed together.

14. The method according to claim 13, in which 1 to 60% component (1), 1 to 40% component (2), 0.5 to 20% component (3), 0.5 to 20% component (4) and 0.5 to 20% component (5) are mixed.

15. The use of a corrosion-inhibiting substance combination according to any one of claims 1 to 12 as a vapor phase corrosion inhibitor (VPCI, VCI) in the form of fine-powdered mixtures in the packing, storage or transport of metal materials.

16. The use of a corrosion-inhibiting substance combination according to any one of claims 1 to 12 for incorporation in coating substances.

17. The use of a corrosion-inhibiting substance combination according to any one of claims 1 to 12 in the form of mixtures with polymeric materials, e.g. polyolefins or polyesters.

18. The use of a corrosion-inhibiting substance combination according to any one of claims 1 to 12 for the corrosion protection of customary utility metals, such as iron, chromium, nickel, tin, zinc, aluminum, copper, magnesium and their alloys.

## Revendications

1. Combinaison d'inhibiteurs de corrosion susceptibles d'évaporation ou de sublimation, comprenant :
(1) au moins un acide monocarboxylique aliphatique ayant de C₆ à C₁₀,
(2) au moins un acide dicarboxylique aliphatique ayant de C₆ à C₁₀,
(3) un amide aromatique primaire, et
(4) un ester aliphatique de l'acide hydroxybenzoïque.

2. Combinaison d'inhibiteurs de corrosion selon la revendication 1, comprenant en outre (5) un benzimidazole.

3. Combinaison d'inhibiteurs de corrosion selon la revendication 2, dans laquelle le benzimidazole est un benzimidazole substitué sur le cycle benzénique.

4. Combinaison d'inhibiteurs de corrosion selon l'une des revendications 1 à 3, dans laquelle l'acide hydroxybenzoïque est l'acide 4-hydroxybenzoïque.

5. Combinaison d'inhibiteurs de corrosion selon l'une des revendications 2 à 4, comprenant 1 à 60 % du composant (1), 1 à 40 % du composant (2), 0,5 à 20 % du composant (3), 0,5 à 20 % du composant (4) et 0,5 à 20 % du composant (5).

6. Combinaison d'inhibiteurs de corrosion selon l'une des revendications précédentes, dans laquelle tous les composants sont susceptibles d'évaporation ou de sublimation dans la plage de températures allant jusqu'à 80 °C à des humidités relatives de l'air (HR) ≤ 98 %.

7. Combinaison d'inhibiteurs de corrosion selon l'une des revendications précédentes, dans laquelle l'acide monocarboxylique aliphatique ayant de C₆ à C₁₀ est choisi parmi l'acide hexanoïque (acide caproïque), l'acide 2,4-hexadiénique (acide sorbique), l'acide heptanoïque (acide énanthique), l'acide octanoïque (acide caprylique), l'acide 2-éthylhexanoïque, l'acide nonanoïque (acide pelargonique), l'acide isononanoïque, l'acide décanoïque (acide caprique) ou une combinaison de ceux-ci.

8. Combinaison d'inhibiteurs de corrosion selon l'une des revendications précédentes, dans laquelle l'acide dicarboxylique aliphatique est choisi parmi le diacide hexanoïque (acide adipique), le diacide heptanoïque (acide pimélique), le diacide nonanoïque (acide azélaïque), le diacide décanoïque (acide sébacique) ou une combinaison de ceux-ci.

9. Combinaison d'inhibiteurs de corrosion selon l'une des revendications 1 à 8, dans laquelle l'ester aliphatique de l'acide 4-hydroxybenzoïque est choisi parmi le 4-hydroxybenzoate de méthyle (méthylparabène), le 4-hydroxybenzoate d'éthyle (éthylparabène) ou une combinaison de ceux-ci.

10. Combinaison d'inhibiteurs de corrosion selon l'une des revendications précédentes, dans laquelle l'amide aromatique est choisi parmi le benzamide, le 2-aminobenzamide, le 4-aminobenzamide, le benzènaminoamide (N-benzylurée), l'amide d'acide pyridine-3-carboxylique (nicotinamide) ou une combinaison de ceux-ci.

11. Combinaison d'inhibiteurs de corrosion selon l'une des revendications précédentes 2 à 10, dans laquelle le benzimidazole est choisi parmi le 5,6-diméthylbenzimidazole ou une combinaison de celui-ci avec un autre benzimidazole substitué sur le cycle benzénique.

12. Combinaison d'inhibiteurs de corrosion selon l'une des revendications précédentes, comprenant encore en plus d'autres substances ayant une action d'inhibiteurs de corrosion en phase vapeur, seules ou bien en mélange de celles-ci.

13. Procédé de préparation d'une combinaison d'inhibiteurs de corrosion susceptibles d'évaporation ou de sublimation, dans lequel on mélange ensemble (1) un ou plusieurs acides carboxyliques aliphatiques ayant de C₆ à C₁₀, (2) un ou plusieurs acides dicarboxyliques aliphatiques de C₆ à C₁₀, (3) un amide aromatique primaire ou plusieurs, (4) un ester aliphatique de l'acide hydroxybenzoïque et optionnellement (5) un benzimidazole.

14. Procédé selon la revendication 13, dans lequel on mélange 1 à 60 % du composant (1), 1 à 40 % du composant (2), 0,5 à 20 % du composant (3), 0,5 à 20 % du composant (4) et 0,5 à 20 % du composant (5).

15. Utilisation d'une combinaison d'inhibiteurs de corrosion selon l'une des revendications 1 à 12 en tant qu'inhibiteur de corrosion en phase vapeur (VPCI, VCI) sous forme de mélanges de poudres fines lors de l'emballage, du stockage ou du transport de matériaux métalliques.

16. Utilisation d'une combinaison d'inhibiteurs de corrosion selon l'une des revendications 1 à 12 pour l'incorporation dans des matières de revêtement.

17. Utilisation d'une combinaison d'inhibiteurs de corrosion selon l'une des revendications 1 à 12 sous la forme de mélanges avec des matériaux polymériques, par exemple des polyoléfines ou des polyesters.

18. Utilisation d'une combinaison d'inhibiteurs de corrosion selon l'une des revendications 1 à 12 pour protéger de la corrosion les métaux d'usage usuels, comme le fer, le chrome, le nickel, l'étain, le zinc, l'aluminium, le cuivre, le magnésium et leurs alliages.
